# EUROPÄISCHE PATENTSCHRIFT

(11) **EP 3 847 575 B1**
(45) Veröffentlichungstag und Bekanntmachung des Hinweises auf die Patenterteilung: **22.04.2026**
(21) Anmeldenummer: 19744636.2
(22) Anmeldetag: 10.07.2019
(51) Int. Cl.: G06V 20/52

(54) **ÜBERWACHUNGSVORRICHTUNG UND VERFAHREN ZUR MANN-ÜBER-BORD-ÜBERWACHUNG**
MONITORING DEVICE AND METHOD FOR MONITORING A MAN OVERBOARD SITUATION
SYSTÈME MÉTHODE DE SURVEILLANCE POUR DÉTECTION D'HOMME-À-LA-MER

(30) Priorität: 06.09.2018 DE 102018215125
(43) Veröffentlichungstag der Anmeldung: 14.07.2021
(73) Patentinhaber: Robert Bosch GmbH, 70442 Stuttgart (DE)
(72) Erfinder: IKE, Thorsten, 30519 Hannover (DE); FILLBRANDT, Holger, 31162 Bad Salzdetfurth (DE)
(74) Vertreter: Winter, Brandl - Partnerschaft mbB
(86) Internationale Anmeldenummer: PCT/EP2019/068568
(87) Internationale Veröffentlichungsnummer: WO 2020/048666

(56) Entgegenhaltungen:
- WO-A1-2017/187407
- DE-A1- 102016 222 134

## Beschreibung

### Stand der Technik

Es wird eine Überwachungsvorrichtung zur Mann-über-Bord-Überwachung in einem Schiffsabschnitt vorgeschlagen. Der Schiffsabschnitt ist mittels mindestens einer Kamera videotechnisch überwacht, wobei die erste Kamera ausgebildet ist, die Überwachung als Videodaten bereitzustellen. Die Überwachungsvorrichtung weist eine Auswerteeinrichtung auf, welche ausgebildet ist, basierend auf den Videodaten ein bewegtes Objekt im Schiffsabschnitt zu detektieren.

Auf Schiffen und insbesondere auf Passagierschiffen und Kreuzfahrtschiffen, ist es ein bekanntes Problem, dass während der Fahrt unbemerkt Passagiere über Bord fallen. Solche Ereignisse bezeichnet man als Mann-über-Bord-Ereignisse. Die Überlebenschancen eines solchen Ereignisses sinken zunehmend mit der Zeit, die verstreicht, bis das Ereignis entdeckt wurde.

Reedereien sind dabei in hohem Maße daran interessiert, ein Mann-über-Bord-Ereignis schnellstmöglich zu bemerken. Auch durch Regierungsvorschriften und/oder von Versicherungen wird erhöht Druck auf Reedereien ausgeübt, solche Ereignisse bestmöglich in die Überwachung aufzunehmen.

Bei Frachtschiffen ist es dabei beispielsweise vorgesehen, Personen mit speziellen Armbändern oder anderer Technik auszustatten, welche diese bei sich tragen müssen, um so Mann-über-Bord-Ereignisse detektieren zu können. Radarbasierte Verfahren sind relativ kostspielig und benötigen eine hohe Anzahl an Sensorik.

Bild- und/oder videobasierte Ansätze haben das Problem, basierend auf der Vielzahl an möglichen Events, Objekten und wegen eines dynamischen Hintergrundes in der Fahrt störanfällig zu sein, wobei viele Ereignisse als falsche Mann-über-Bord-Ereignisse detektiert und bewertet werden.

In der Druckschrift D1 (WO 2017/187407 A1) wird eine Kombination aus Kamera und Radar zur Mann-über-Bord-Überwachung auf Schiffen offenbart. Mittels Differenzbildung werden sich verändernde Pixel bestimmt. Die sich verändernden Pixel werden auf Bewegungen überprüft und Beschleunigungen berechnet. Weiterhin wird mittels Radar Abstände ermittelt und anhand der Pixel auf Größenverhältnisse geschlossen. Wenn ein Mann-über-Bord erkannt wird, wird ein Alarm mit Videodaten erzeugt. Wenn ein Mann-über-Bord nicht erkannt wird, wird kein Alarm erzeugt.

### Offenbarung der Erfindung

Es wird eine Überwachungsvorrichtung zur Mann-über-Bord-Überwachung mit den Merkmalen des Anspruchs 1 vorgeschlagen. Ferner wird ein Verfahren zur Mann-über-Bord-Überwachung mit den Merkmalen des Anspruchs 14 und ein Computerprogramm mit den Merkmalen des Anspruchs 15 bereitgestellt. Bevorzugte und/oder vorteilhafte Ausgestaltungen der Erfindung ergeben sich aus den Unteransprüchen, der Beschreibung und den beigefügten Figuren.

Es wird eine Überwachungsvorrichtung zur Mann-über-Bord-Überwachung in einem Schiffsabschnitt vorgeschlagen. Insbesondere kann die Überwachungsvorrichtung ausgebildet sein, eine Mann-über-Bord-Überwachung in mehreren Schiffsabschnitten, insbesondere zusammenhängenden oder unzusammenhängenden Schiffsabschnitten, durchzuführen. Insbesondere ist die Überwachungsvorrichtung zur video- und/oder bildtechnischen Mann-über-Bord-Überwachung ausgebildet. Mittels der Überwachungsvorrichtung kann dabei festgestellt werden, ob ein Mensch über Bord gefallen ist oder ob es sich um ein anderes nicht menschliches Objekt handelt. Der Schiffsabschnitt ist dabei beispielsweise ein Umgebungsbereich um eine Kamera oder um eine Mehrzahl an Kameras. Der Schiffsabschnitt bildet einen räumlichen Abschnitt. Vorzugsweise umfasst der Schiffsabschnitt einen Bereich jenseits der Reling und/oder einen Teilbereich des Meeres.

Der Schiffsabschnitt ist mittels mindestens einer Kamera videotechnisch überwacht. Insbesondere kann der Schiffsabschnitt mit einer Mehrzahl an Kameras video- und/oder bildtechnisch überwacht sein. Die Kameras können einen gemeinsamen überlappenden Abschnitt aufweisen, alternativ sind die Überwachungsbereiche der Kameras überlappungsfrei ausgebildet. Die Kameras sind vorzugsweise Farb- und/oder Schwarz-Weiß-Kameras. Alternativ kann es sich bei der Kamera um eine Wärmebildkamera handeln. Die Kamera ist ausgebildet, ein Bild, ein Video und/oder eine Bildsequenz des Schiffsabschnitts aufzunehmen. Ferner ist die Kamera ausgebildet, die Bilder, das Video und/oder die Bildsequenz als Videodaten nach extern bereitstellen zu können. Die Kameras sind vorzugsweise so angeordnet, dass sie eine horizontale Blickrichtung aufweisen. Ferner kann es vorgesehen sein, dass die Kameras im Speziellen einen Blickwinkel zur Horizontalen einschließen, welcher geringer ist, als zwanzig Grad. Mittels der Kamera kann insbesondere so ein Objekt detektiert und/oder aufgenommen werden, welches über Bord geht und/oder im Meer landet. Die Schiffsabschnitte sind im Speziellen besonders sicherheitsrelevante Abschnitte des Schiffes, beispielsweise von Personen und/oder Passagieren zugängliche Abschnitte mit Gefahrbereich zum Absturz ins Meer. Es sind auf dem zu überwachenden Schiff eine Vielzahl an Kameras angeordnet, sodass eine Vielzahl an Abschnitten des Schiffes überwacht wird, wobei die Kameras ausgebildet sind, ihre Videodaten der Überwachungsvorrichtung bereitzustellen.

Die Überwachungsvorrichtung weist eine Auswerteeinrichtung auf. Die Auswerteeinrichtung kann ein Hardwaremodul, alternativ ein Softwaremodul, bilden. Beispielsweise ist die Auswerteeinrichtung als eine Rechnereinheit, als ein Prozessor oder als ein Mikrochip ausgebildet. Die Auswerteeinrichtung weist eine Schnittstelle zur Übernahme der Videodaten auf. Die Schnittstelle kann eine physikalische, beispielsweise eine Kabelschnittstelle sein, eine Funkschnittstelle oder eine virtuelle Schnittstelle bilden. Vorzugsweise sind der Auswerteeinrichtung die Videodaten einer Mehrzahl an Kameras und/oder aller Kameras zur Überwachung von Schiffsabschnitten des Schiffes bereitgestellt. Insbesondere kann die Auswerteeinrichtung auch zur Speicherung der Videodaten ausgebildet sein. Ferner kann es vorgesehen sein, dass die Auswerteeinrichtung eine zentrale Auswerteeinrichtung, beispielsweise in einer Überwachungszentrale des Schiffes, bildet.

Die Auswerteeinrichtung ist ausgebildet, ein bewegendes Objekt im Schiffsabschnitt basierend auf den Videodaten zu detektieren. Die Auswerteeinrichtung wertet beispielsweise dazu die Videodaten auf Bewegungen und/oder Objekte aus. Beispielsweise vergleicht die Auswerteeinrichtung dazu Bilder und/oder Bildsequenzen in den Videodaten, insbesondere einer oder mehrerer Kameras. Insbesondere kann die Auswerteeinrichtung ausgebildet sein, abwärts bewegende Objekte im Schiffsabschnitt zu detektieren.

Die Auswerteeinrichtung ist ausgebildet, für ein sich bewegendes Objekt eine kinematische Größe zu bestimmen. Die kinematische Größe ist beispielsweise die Geschwindigkeit des Objektes als Vektor, als Betrag und/oder als Richtung. Alternativ kann die kinematische Größe ein Pfad, ein Impuls, ein Startpunkt oder ein Endpunkt sein. Vorzugsweise werden mehrere oder alle kinematischen Größen des Objektes bestimmt, die nötig sind, die Bewegung des Objektes zu beschreiben. Insbesondere wird von der Auswerteeinrichtung die kinematische Größe für eine Mehrzahl und/oder alle Bilder einer Bildsequenz und/oder eines Videos bestimmt. Alternativ und/oder ergänzend kann es vorgesehen sein, dass die Auswerteeinrichtung ausgebildet ist, die kinematische Größe in vorgegebenen Zeitabständen zu bestimmen, beispielsweise in einem Abstand von 1 Millisekunde, 500 Mikrosekunden oder einer Sekunde.

Die Erfindung sieht vor, dass die Auswerteeinrichtung ausgebildet ist, das bewegende Objekt als ein Mann-über-Bord-Ereignis auf Basis seiner Ausdehnung zu bestimmen. Die Ausdehnung ist insbesondere eine Flächenausdehnung, beispielsweise ein Durchmesser oder ein Flächenmaß. Alternativ kann die Ausdehnung ein Volumenmaß bilden. Die Ausdehnung ist beispielsweise eine Länge, eine Breite oder ein Durchmesser des Objektes. Die Ausdehnung ist insbesondere ein Maß für die Größe des Objekts in der Realität. Vorzugsweise ist die Ausdehnung die maximale Längserstreckung eines Objektes. Die Ausdehnung des Objektes wird insbesondere auf Basis der Videodaten und der kinematischen Größe bestimmt. Vorzugsweise wird von der Auswerteeinrichtung über die kinematische Größe und die Videodaten ein Maßstab, beispielsweise ein Abbildungsmaßstab, bestimmt, wobei basierend auf dem Maßstab die Ausdehnung des Objekts bestimmt wird. Beispielsweise wird basierend auf dem Maßstab das Objekt in den Videodaten vermessen und/oder bestimmt. Die Ausdehnung des Objektes ist insbesondere eine reale Ausdehnung. Beispielsweise ist die Auswerteeinrichtung ausgebildet, die Videodaten und/oder die kinematische Größe des Objektes und/oder des Ereignisses, welches zum Objekt gehört, auszuwerten und auf die Möglichkeit eines Mann-über-Bord-Ereignisses zu untersuchen, wobei die Verifikation oder Ablehnung als Mann-über-Bord-Ereignis auf der Ausdehnung des Objektes basiert. Beispielsweise ist die Auswerteeinrichtung ausgebildet, alle beschleunigten Bewegungen, insbesondere vertikal gerichteten und/oder zum Meer gerichteten beschleunigten Bewegungen, als mögliche Mann-über-Bord-Ereignisse zu bewerten, wobei der Ausschluss und/oder die Verifikation, ob es sich um ein wirkliches Mann-über-Bord-Ereignis handelt, auf Basis der Ausdehnung bestimmt wird. Auf diese Art und Weise kann beispielsweise ausgeschlossen werden, dass ein herabfallender Gegenstand, beispielsweise eine Zigarette, fälschlicherweise als ein Mann-über-Bord-Ereignis detektiert wird.

Der Erfindung liegt die Überlegung zugrunde, dass im bisherigen Stand der Technik rein videobasierte Ansätze zwar kostengünstig in der Installation sind, allerdings die bildverarbeitenden Algorithmen bisher nicht so sensitiv und robust sind, dass Falschdetektionen unterdrückt werden. Insbesondere Witterungsbedingungen und Beleuchtungsszenarien sorgen für vermehrte Fehlalarme. Ferner erschwert die dynamische Szenerie mit viel Bewegung, beispielsweise durch Wellengang, Gischt, fahrende Objekte auf Wasser oder an Land, bewegende Personen an Bord, Vögel und andere Ereignisse die Anwendung von videobasierten Ansätzen. Durch die vorliegende Erfindung ist jedoch eine kostengünstige Möglichkeit und flexibel einsetzbare Überwachungsvorrichtung bereitgestellt, die eine hohe Zuverlässigkeit und Robustheit der automatischen Detektierung von Mann-über-Bord-Ereignissen mittels Videokameras ermöglicht. Insbesondere zeichnet sich die Überwachungsvorrichtung durch eine geringe Fehlalarmwahrscheinlichkeit aus.

Eine Ausgestaltung der Erfindung sieht vor, dass die Auswerteeinrichtung ausgebildet ist, als kinematische Größe eine Fallbeschleunigung zu bestimmen. Beispielsweise ist die Auswerteeinrichtung ausgebildet, in den Videodaten Beschleunigungen des Objektes zu bestimmen, beispielsweise durch zeitliche Verfolgung und/oder durch Auswertung der Trajektorie. Vorzugsweise wird die Fallbeschleunigung und/oder Beschleunigung in vertikale Richtung, insbesondere senkrecht zur Meeresoberfläche, bestimmt. Im Speziellen kann es vorgesehen sein, dass die Trajektorie als eine Wurfparabel modelliert wird, wobei die Fallbeschleunigung aus der Trajektorie und/oder Wurfparabel bestimmt wird. Beispielsweise wird die Bewegung als eine quadratische Funktion und/oder als ein Polynom bestimmt, wobei die Fallbeschleunigung insbesondere als der Vorfaktor des quadratischen Gliedes interpretiert wird. Die gemessene und/oder bestimmte Fallbeschleunigung wird insbesondere mit einer Referenzfallbeschleunigung verglichen. Dieser Vergleich erfolgt insbesondere durch die Auswerteeinrichtung. Als Referenzfallbeschleunigung wird der physikalische Wert der Schwerebeschleunigung am jeweiligen Ort aufgefasst. Als Referenzbeschleunigung wird beispielsweise der Wert 9,81 m/s² zum Quadrat verwendet. Beispielsweise kann die Auswerteeinrichtung basierend auf der Erkenntnis, dass die gemessene Fallbeschleunigung in den Videodaten der Fallbeschleunigung 9,81 Meter pro Sekunde und/oder der Referenzbeschleunigung zu entsprechen hat, einen Maßstab in den Videodaten und/oder Bildern bestimmen und/oder insbesondere so die Ausdehnung des Objektes bestimmen. Dieser Erkenntnis liegt die Überlegung zugrunde, dass bei einer gemessenen Fallbeschleunigung und dem Vergleich mit einer Referenzfallbeschleunigung eine Zuordnung von Pixeln zu realen Metern möglich ist.

Besonders bevorzugt ist es, dass die Auswerteeinrichtung ein Tracking-Modul umfasst. Das Tracking-Modul ist beispielsweise als ein Software-Modul, alternativ als ein Hardware-Modul wie beispielsweise ein Prozessor oder ein Mikrochip, ausgebildet. Das Tracking-Modul ist ausgebildet, basierend auf den Videodaten eine Trajektorie für das bewegende Objekt zu bestimmen. Beispielsweise wird dazu eine Bildsequenz der Videodaten in festen und/oder variierenden Zeitschritten ausgewertet und der Pfad und/oder die Bahn des Objekts rekonstruiert und/oder festgelegt. Das Tracken des Objektes kann auf einer grafischen Methode basieren, alternativ auf einem numerischen Verfahren und insbesondere auf einer Modellierung, beispielsweise als eine parabelförmige Trajektorie. Die Auswerteeinrichtung ist ferner ausgebildet, basierend auf der Trajektorie die kinematische Größe zu bestimmen. Beispielsweise kann durch Auswertung der Trajektorie eine Richtung der Geschwindigkeit, eine Geschwindigkeit und/oder eine Fallbeschleunigung bestimmt werden. Beispielsweise wird als Geschwindigkeit der Tangentialvektor an der Trajektorie zum jeweiligen Zeitpunkt verstanden. Insbesondere kann die Trajektorie einem Benutzer angezeigt werden und/oder für den Benutzer anzeigbar sein, sodass dieser auch optisch das Ereignis bewerten und/oder nachverfolgen kann.

Optional ist es vorgesehen, dass die Auswerteeinrichtung ein Selektiermodul aufweist. Das Selektiermodul ist ausgebildet, die kinematische Größe von Objekten mit parabelförmigen Trajektorien zu bestimmen. Insbesondere ist das Selektiermodul ausgebildet, die Trajektorien und/oder die kinematischen Größen von Objekten mit einer beschleunigten Bewegung in vertikale Richtung zu bestimmen. Ferner ist das Selektiermodul ausgebildet, Objekte mit nicht parabelförmiger Trajektorie und/oder Objekte ohne beschleunigte Bewegung in vertikale Richtung von der Bestimmung der kinematischen Größe auszuschließen. Beispielsweise werden solche Objekte und/oder solche Ereignisse von unbeschleunigter vertikaler Bewegung und/oder ohne parabelförmige Trajektorie als nicht relevante Ereignisse ausgeschlossen und/oder deren Daten nicht weiter überwacht. Insbesondere kann so eine Datenreduktion für die eigentliche Auswertung und/oder für die Bestimmung der Ausdehnung erfolgen. Dieser Ausgestaltung liegt die Überlegung zugrunde, dass durch eine vorherige Filterung in Objekte und/oder Ereignisse, welche eine beschleunigte Bewegung aufweisen und keine beschleunigte Bewegung aufweisen, Objekte ausgeschlossen werden können, die nicht frei fallen, beispielsweise Vögel, Gischt und/oder Wellen.

Eine Ausgestaltung der Erfindung sieht vor, dass die Auswerteeinrichtung ein Segmentiermodul aufweist. Das Segmentiermodul ist insbesondere als ein Software-Modul ausgebildet. Das Segmentiermodul ist ausgebildet, ein bewegendes Objekt in den Videodaten, den Einzelbildern und/oder der Bildersequenz der Videodaten als Objekt vor einem Hintergrund zu segmentieren. Insbesondere ist es möglich, dass das Segmentiermodul ausgebildet ist, das Objekt vor einem dynamischen Hintergrund zu segmentieren. Das Segmentiermodul erkennt dabei beispielsweise Objektabschnitte, welche einen Zusammenhang bilden und/oder zusammengehören. Beispielsweise wird ein lokaler signifikanter Unterschied und/oder eine Abweichung zum Bildhintergrund bestimmt. Insbesondere kann zur Segmentierung eine Zusatzinformation hinzugezogen werden, wobei die Zusatzinformation beispielsweise eine kontinuierliche und/oder stetige Bahn und/oder Trajektorie voraussetzt. Dieser Ausgestaltung liegt die Überlegung zugrunde, dass ein sich bewegendes Objekt ein ausgedehntes Objekt bildet und einen Objektzusammenhang aufweist, welcher durch Segmentierung festlegbar ist.

Besonders bevorzugt ist es, dass das Tracking-Modul ausgebildet ist, die Trajektorie basierend auf dem segmentierten Objekt und insbesondere auf dem Schwerpunkt des segmentierten Objektes zu bestimmen. Ferner kann es vorgesehen sein, dass die Auswerteeinrichtung ausgebildet ist, die kinematische Größe für den Schwerpunkt des segmentierten Objektes zu bestimmen. Dieser Ausgestaltung liegt die Überlegung zugrunde, dass frei fallende Objekte oft einen rotatorischen Freiheitsgrad aufweisen und so ein Punkt auf der Oberfläche des Objektes sich zeitlich verändert, wohingegen der Schwerpunkt der Sollparabel und/oder Trajektorie folgt.

Besonders bevorzugt ist es, dass die Auswerteeinrichtung ausgebildet ist, basierend auf der kinematischen Größe eine Auflösung in den Bildern der Videodaten zu bestimmen. Insbesondere wird als Auflösung die Zuordnung Pixel zu Meter und/oder allgemein Pixel zu Längeneinheit verstanden. Beispielsweise ist als kinematische Größe ein Beschleunigungswert und/oder eine Beschleunigung in Form von Pixel pro Quadratzentimeter bestimmt. Nachdem eine Referenzfallbeschleunigung, beispielsweise 9,81 Meter pro Sekunde zum Quadrat, bekannt ist, kann durch Verhältnisbildung des bestimmten Beschleunigungswerts zur Referenzfallbeschleunigung eine Auflösung bestimmt werden. Durch Auswertung der Objektgröße in den Videodaten und/oder Einzelbildern, beispielsweise als Pixelgröße, kann so die Ausdehnung in der Realität und/oder eine reale Größe des fallenden Objektes bestimmt werden. Somit ist es möglich, ohne eine explizite Kalibrierung der Kamera und/oder der Videodaten die Ausdehnung des fallenden und/oder bewegenden Objektes zu bestimmen und so beispielsweise einen fallenden Menschen von einer fallenden Zigarette zu unterscheiden.

Besonders bevorzugt ist es, dass die Überwachungsvorrichtung eine erste Kamera zur Bereitstellung der Videodaten aufweist. Die erste Kamera ist insbesondere eine Farbkamera, eine Schwarz-Weiß- oder eine Graustufenkamera. Die erste Kamera ist ausgebildet, den Schiffsabschnitt videotechnisch zu überwachen und die Videodaten bereitzustellen. Die Überwachung des Schiffsabschnitts durch die erste Videokamera erfolgt im sichtbaren Wellenlängenbereich. Insbesondere kann die Überwachungsvorrichtung auch eine Mehrzahl an erster Kameras zur Bereitstellung von einer Mehrzahl an Videodaten aufweisen. Insbesondere ist es dabei vorgesehen, dass die Auswerteeinrichtung eine zentrale Auswerteeinrichtung, beispielsweise in einem Überwachungsraum, bildet, wobei die ersten Kameras datentechnisch mit der Auswerteeinrichtung verbunden sind.

Besonders bevorzugt ist es, dass die Überwachungsvorrichtung eine zweite Kamera zur Bereitstellung weiterer Videodaten aufweist. Insbesondere ist die zweite Kamera zur Überwachung des gleichen Schiffsabschnitts ausgebildet wie die erste Kamera. Erste Kamera und zweite Kamera bilden somit vorzugsweise einen gemeinsamen Schiffsabschnitt ab. Die zweite Kamera bildet insbesondere eine IR-Kamera oder eine Wärmebildkamera. Im Speziellen ist es vorgesehen, dass erste Kamera und zweite Kamera den gemeinsamen Schiffsabschnitt in einem unterschiedlichen Wellenlängenbereich abbilden. Durch die Kombination einer ersten Kamera und einer zweiten Kamera in unterschiedlichen Wellenlängenbereichen erhöht sich der verarbeitbare Wellenlängenbereich und die Detektionszuverlässigkeit kann signifikant gesteigert werden. Beispielsweise kann bei Nacht und Nebel und/oder bei schlechtem Wetter eine Thermal- und/oder Wärmebildkamera deutliche Vorteile gegenüber einer normalen Kamera haben, wohingegen die Wärmebildkamera an heißen Sommertagen der normalen Kamera unterlegen ist. Insbesondere ist es durch die Verwendung der ersten und zweiten Kamera dem Schiffspersonal möglich, einen Alarm und/oder ein Ereignis besser verifizieren zu können. Ferner ist es vorzugsweise vorgesehen, dass die erste Kamera und die zweite Kamera ein gemeinsames Kameramodul bilden.

Eine Ausgestaltung der Erfindung sieht vor, dass die erste Kamera, die zweite Kamera und/oder das Kameramodul die Auswerteeinrichtung aufweist und/oder umfasst. Damit ist es vorgesehen, dass die Ausdehnungsbestimmung und/oder die Bestimmung der kinematischen Größe in der ersten Kamera, in der zweiten Kamera und/oder dem Kameramodul erfolgt. Vorzugsweise erfolgt die Auswertung in der ersten Kamera und der zweiten Kamera unabhängig voneinander. Beispielsweise werden die Videodaten der ersten Kamera und die Videodaten der zweiten Kamera unabhängig voneinander ausgewertet, beispielsweise unabhängig die kinematischen Größen bestimmt und/oder unabhängig die Ausdehnung des Objektes bestimmt. Dabei kann es ferner vorgesehen sein, dass die erste Kamera und/oder die zweite Kamera, im Speziellen das Kameramodul, ausgebildet ist, die Videodaten auszugeben, die kinematische Größe und/oder die Ausdehnung des Objektes als Daten auszugeben. Dieser Ausgestaltung liegt die Überlegung zugrunde, dass in beengten Situationen am Schiff es sinnvoll erscheint, die Rechenleistung in die Kameras selbst zu integrieren, sodass Platz für zentrale ausgedehnte Recheneinheiten reduziert werden kann.

Optional ist es vorgesehen, dass die Auswerteeinrichtung ausgebildet ist, bei Detektion eines Mann-über-Bord-Ereignisses einen Alarm auszugeben. Beispielsweise ist die Überwachungsvorrichtung ausgebildet, einen Alarm auszugeben, wenn eine kinematische Größe einen Wert über- oder untersteigt, beispielsweise eine Fallbeschleunigung und/oder eine Geschwindigkeit aufweist, alternativ und/oder ergänzend kann es vorgesehen sein, dass der Alarm ausgegeben wird, wenn die Ausdehnung einer Mindestausdehnung entspricht und davon ausgegangen werden kann, dass es sich um einen Menschen handelt. Insbesondere ist es dabei vorgesehen, dass die erste Kamera, die zweite Kamera und/oder die zweite Kamera neben den Videodaten auch einen Alarm oder ein Signal zur Ausgabe eines Alarms ausgeben kann.

Besonders bevorzugt ist es, dass die Auswerteeinrichtung, die erste Kamera, die zweite Kamera und/oder das Kameramodul ausgebildet ist, bei Ausgabe eines Alarms die korrespondierenden Videodaten auszugeben. Beispielsweise ist es damit möglich, dass bei Ausgabe eines Alarms und/oder bei Vorliegen eines Mann-über-Bord-Ereignisses einem Benutzer direkt entsprechende Videodaten bereitgestellt werden, sodass dieser schnell und effizient entscheiden kann, ob weitere Maßnahmen einzuleiten sind.

Besonders bevorzugt ist es, dass die Auswerteeinrichtung ein Modellmodul umfasst. Das Modellmodul umfasst Zusatzinformationen insbesondere zum Schiffsabschnitt und/oder der Umgebung. Beispielsweise umfasst das Modellmodul Informationen der Lage von besonders gefährlichen Bereichen, und/oder Bereichen, wo es vorkommen kann, dass ein Mensch über Bord geht. Die Auswerteeinrichtung ist dabei ausgebildet, die kinematische Größe und/oder das Detektieren des Mann-über-Bord-Ereignisses unter Einbeziehung der Zusatzinformationen zu bestimmen. Beispielsweise kann die Auswerteeinrichtung Bereiche des Schiffsabschnitts ausschließen, an denen es zu keinen Mann-über-Bord-Ereignissen kommen kann, beispielsweise da dort kein Zugang zum Meer erfolgt und/oder erfolgen kann, beziehungsweise dort ausreichend Sicherheitsmaßnahmen getroffen sind, sodass eine Person dort nicht über Bord gehen kann.

Einen weiteren Gegenstand der Erfindung bildet ein Verfahren zur Bestimmung eines Mann-über-Bord-Ereignisses. Dazu wird ein Schiffsabschnitt mittels einer Kamera und/oder mittels mehrerer Kameras videotechnisch überwacht. Die videotechnische Überwachung stellt Videodaten, Einzelbilder und/oder Bildsequenzen bereit. Durch Auswertung der Videodaten wird eine kinematische Größe, beispielsweise eine Fallbeschleunigung in vertikale Richtung, bestimmt. Basierend auf der bestimmten kinematischen Größe wird eine Ausdehnung des Objektes bestimmt, beispielsweise durch Vergleichen einer Referenzfallbeschleunigung mit einer bestimmten Beschleunigung, wobei insbesondere bei Überschreiten einer Mindestausdehnung auf ein Mann-über-Bord-Ereignis geschlossen wird.

Einen weiteren Gegenstand der Erfindung bildet ein Computerprogramm, insbesondere ein Computerprogramm auf einem Datenträger gespeichert. Das Computerprogramm ist ausgebildet, alle Schritte des Verfahrens durchzuführen, wenn das Computerprogramm auf einem Rechner, der Überwachungsvorrichtung und/oder der Auswerteeinrichtung ausgeführt wird.

Einen weiteren Gegenstand der Erfindung bildet ein Schiff, insbesondere ein Passagierschiff, mit einem Schiffsabschnitt und der beschriebenen Überwachungsvorrichtung zur Mann-über-Bord-Überwachung in dem Schiffsabschnitt.

Weitere Vorteile, Wirkungen und Ausgestaltungen ergeben sich aus den beigefügten Figuren sowie deren Beschreibung. Dabei zeigen:
Figur 1 schematisch eine Überwachungsvorrichtung;
Figur 2 beispielhafte Kameraverteilung auf einem Schiff;
Figur 3 beispielhafte Trajektorie;
Figur 4 Bild mit Zusatzinformationen.

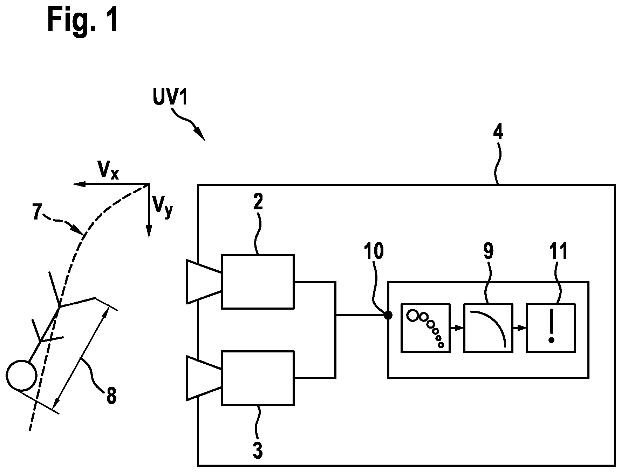

Figur 1 zeigt eine Überwachungsvorrichtung 1. Die Überwachungsvorrichtung 1 ist zur Überwachung eines Schiffs 12 und/oder eines Schiffsabschnittes 5. Mittels der Überwachungsvorrichtung 1 ist das Über-Bord-Gehen einer Person 6 detektierbar. Insbesondere dient die Überwachungsvorrichtung 1 zum Finden und/oder Überwachen von Mann-über-Bord-Ereignissen. Mittels der Überwachungsvorrichtung 1 ist insbesondere ein über Bord gehender Mensch von anderen über Bord gehenden Gegenständen, beispielsweise Zigaretten oder Müll, unterscheidbar, insbesondere durch einen Größenvergleich und/oder eine Bewertung der Ausdehnung des über Bord gehenden Objektes. Ferner ist mittels der Überwachungsvorrichtung 1 zwischen über Bord gehenden Gegenständen, insbesondere fallenden Gegenständen, und Gegenständen, die sich anderweitig oder aufwärts bewegen, beispielsweise einen Vogel, zu unterscheiden.

Die Überwachungsvorrichtung 1 weist zwei Kameras, hier eine erste Kamera 2 und eine zweite Kamera 3, auf. Die erste Kamera 2 und die zweite Kamera 3 sind in einem Kameramodul 4 angeordnet. Das Kameramodul 4 ist auf dem Schiff so angeordnet, dass mit diesem und insbesondere auch mit den Kameras 2 und 3 ein Schiffsabschnitt 5 videotechnisch überwachbar ist. Die erste Kamera 2 ist als eine Farbvideokamera ausgebildet, um Bilder im sichtbaren Wellenlängenbereich aufnehmen zu können. Die zweite Kamera 3 ist als eine Wärmebildkamera ausgebildet und überwacht den Schiffsabschnitt 5 im IR- oder NIR-Bereich. Die erste Kamera 2 und die zweite Kamera 3 sind zur Bereitstellung von Videodaten ausgebildet. Die Videodaten umfassen die videotechnische Überwachung des Schiffsabschnitts 5.

Der Schiffsabschnitt 5 ist beispielsweise ein Bereich jenseits der Reling, insbesondere dem Meer und/oder dem Außenbereich des Schiffes zugewandt. Vorzugsweise ist die Überwachungsvorrichtung 4 so angeordnet, dass die erste Kamera 2 und die zweite Kamera 3 eine horizontale Blickrichtung aufweisen. Eine Person 6 als ein Objekt, welches über Bord geht und/oder über Bord gehen kann, kann mittels der videotechnischen Überwachung durch das Kameramodul 4 detektiert werden. Eine Person 6, die über Bord geht, beschreibt dabei eine parabelförmige Bahn 7 als Trajektorie. Die parabelförmige Bahn 7 entspricht dabei einer Wurfparabel, wobei diese eine konstante horizontale Geschwindigkeit V_{X} und eine vertikale Geschwindigkeit V_{Y} aufweist, wobei die vertikale Geschwindigkeit V_{Y} eine beschleunigte Bewegung darstellt. Ferner weist die Person 6 eine Ausdehnung 8 auf, wobei die Ausdehnung 8 beispielsweise die Höhe und/oder Größe der Person 6 sein kann oder ein Durchmesser, beispielsweise wird dazu der Person 6 ein Rechteck umschrieben, wobei die Ausdehnung 8 dann die Diagonale des Rechtecks wäre.

Von der ersten Kamera 2 und der zweiten Kamera 3 wird die fallende Person 6 im Schiffsabschnitt 5 videotechnisch aufgezeichnet. Diese videotechnische Überwachung wird als Videodaten einer Auswerteeinrichtung 9 bereitgestellt. Die Videodaten werden einer Schnittstelle 10 bereitgestellt, wobei die Schnittstelle 10 von der Auswerteeinrichtung 9 umfasst ist.

Die Auswerteeinrichtung 9 ist ausgebildet, basierend auf den Videodaten das bewegende Objekt 6 im Schiffsabschnitt 5 zu detektieren. Insbesondere wird die Bewegung des Objekts 6 getrackt, beispielsweise in aufeinanderfolgenden Bildern in den Videodaten. Die Bestimmung des bewegenden Objektes und/oder die Trajektorienbestimmung erfolgt für die Videodaten der zweiten Kamera 3 und der ersten Kamera 2 unabhängig voneinander. Basierend auf dem getrackten Objekt 6 wird eine kinematische Größe der Bewegung des bewegenden Objekts, hier der fallenden Person 6, bestimmt. Die kinematische Größe ist die Fallbeschleunigung und/oder das Geschwindigkeitsprofil in vertikale Richtung. Ferner kann die kinematische Größe eine Geschwindigkeit oder eine andere physikalische Größe umfassen. Basierend auf der kinematischen Größe, hier der gemessenen Fallbeschleunigung, werden die Videodaten dahingehend ausgewertet, die Größe und/oder die Ausdehnung 8 des fallenden Objektes zu bestimmen. Beispielsweise wird dazu die gemessene Beschleunigung mit einer Referenzfallbeschleunigung, beispielsweise der Erdbeschleunigung, verglichen. Nachdem bekannt ist, welchen Wert die Referenzfallbeschleunigung hat, beispielsweise 9,81 m/s², und wie viele Pixel pro Sekunde zum Quadrat im Bild die Fallbeschleunigung beschreiben, kann ein Maßstab, hier die Zuordnung von Pixel zu Meter, erfolgen. Durch Vermessen der Ausdehnung des Objekts und/oder der Person 6 im Bild, anhand von Pixel, kann so die Ausdehnung 8 in der realen Welt bestimmt werden. Durch einen Vergleich der Ausdehnung 8 mit einer Mindestausdehnung, beispielsweise einer Mindestgröße für einen Menschen, kann so bestimmt werden, ob es sich um ein potenzielles Mann-über-Bord-Ereignis handelt und gegebenenfalls ein Alarm ausgegeben werden. Unterschreitet die gemessene und/oder bestimmte Ausdehnung 8 die Mindestausdehnung, wird das Ereignis als nicht bedenklich eingestuft und verworfen. Bei Vorliegen eines Mann-über-Bord-Ereignisses oder bei Verdacht darauf kann ein Alarm 11, beispielsweise akustischer Alarm, ausgegeben werden. Vorzugsweise wird zu dem Alarm 11 gleichzeitig das Bildmaterial der entsprechenden Stelle und/oder der entsprechenden Kamera 2, 3 bereitgestellt.

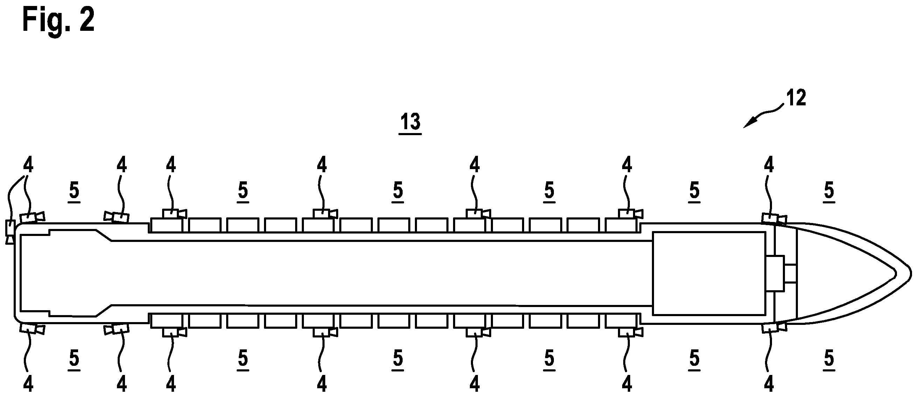

Figur 2 zeigt ein Schiff 12. Das Schiff 12 ist dabei in einer Draufsicht gezeigt. Bei dem Schiff 12 handelt es sich insbesondere um ein Passagierschiff und vorzugsweise um ein Urlaubsschiff. Die Außenbereiche 13 des Schiffs werden mit Kameramodulen 4 überwacht. Die Kameramodule 4 sind insbesondere wie vorher beschrieben ausgebildet. Die Kameramodule 4 sind auf den Außenseiten des Schiffes 12 so angeordnet, dass sie eine horizontale Blickrichtung aufweisen und jeweils einen Schiffsabschnitt videotechnisch überwachen. Pro Kameramodul 4 wird jeweils ein Schiffsabschnitt 5 überwacht. Dabei sind mindestens so viele Kameramodule 4 angeordnet, wie Überwachungsbereiche 5 vorliegen. Durch ein solches Anbringen der Kameramodule 4 wird der gesamte Außenbereich des Schiffs überwacht, sodass Mann-über-Bord-Ereignisse detektierbar sind. Die Kameramodule 4 können mit einer zentralen Auswerteeinrichtung verbunden sein, wobei diese beispielsweise in einem Überwachungsraum angeordnet ist und dort alle Alarme der Kameramodule 4 zusammenlaufen und gegebenenfalls das Videomaterial sichtbar ist.

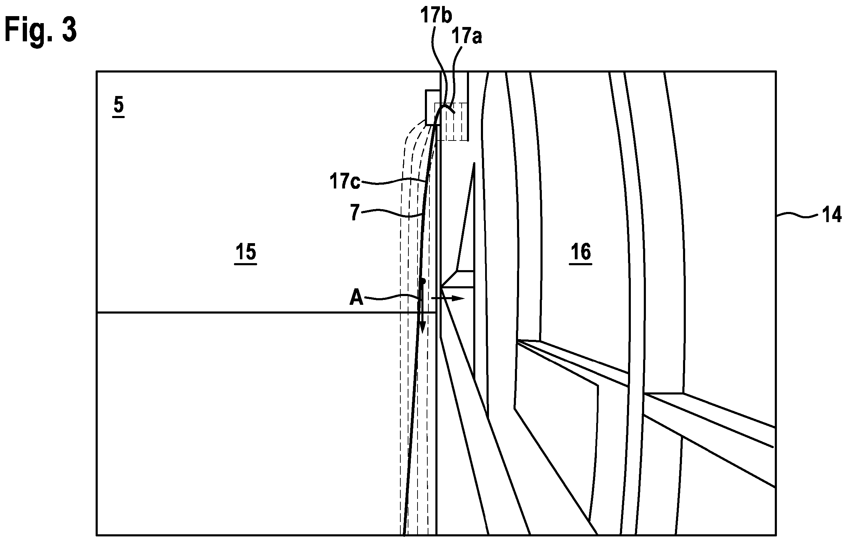

Figur 3 zeigt ein Bild 14 der Videodaten, aufgenommen mit einer der Kameras 2 oder 3. Auf dem Bild 14 ist der Schiffsabschnitt 5 zu sehen, welcher geteilt ist in einen Außenbereich 15 und einen Schiffsbereich 16. Der Schiffsbereich 16 zeigt Teile des Schiffes, hier eine Außenwand. Ferner ist der Pfad 7 gezeigt, den eine fallende Person einschlägt. Die fallende Person springt hierbei über Deck und weist im ersten Abschnitt einen ansteigenden Paradeast 17a auf, welcher nach dem Scheitel 17b in einen fallenden Parabelabschnitt 17c übergeht. Der Pfad 7 ist hierbei durch die Auswerteeinrichtung 9 in Form einer Trajektorie verfolgt oder modelliert worden. Aus der Trajektorie, hier dem parabelförmigen Verlauf des Pfades 7, kann die Fallbeschleunigung A bestimmt werden, wobei die Fallbeschleunigung A mit einer Referenzfallbeschleunigung g verglichen wird und so in dem Bild 14 auf die Größe des fallenden Objektes geschlossen werden kann und so die Ausdehnung des Objektes bestimmt wird.

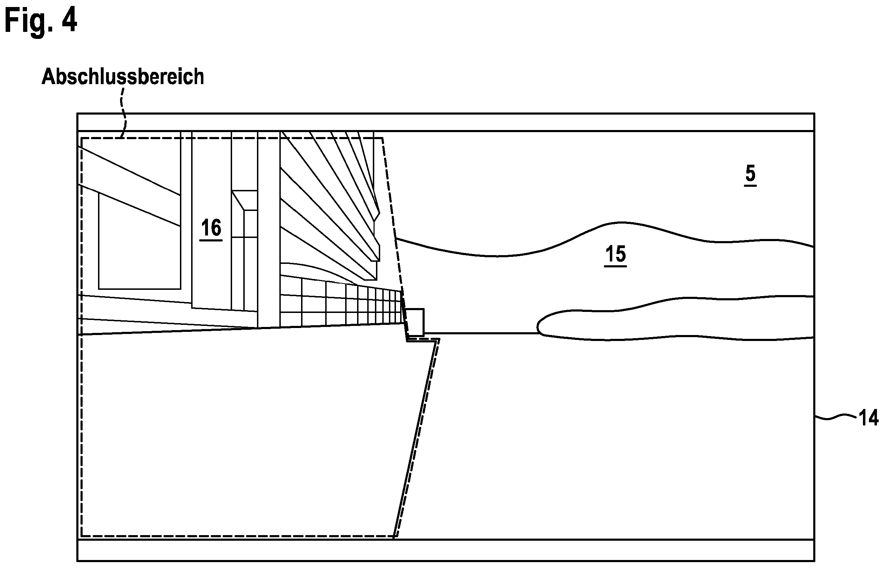

Figur 4 zeigt ebenfalls ein Bild 14, aufgenommen von einer der Kameras 2 oder 3, wobei auch hier der Schiffsabschnitt 5 zweigeteilt ist in einen Außenbereich 15 und einen Schiffsbereich 16. Mittels eines Modellmoduls, welches Teil der Überwachungsvorrichtung 1 ist, sind Zusatzinformationen hinterlegbar und/oder hinterlegt, wobei hier hinterlegt ist, ein Modell des Schiffsabschnitts 5, wobei der Schiffsbereich 16 von einer Auswertung ausgeschlossen ist, sodass eine robuste, dateneffiziente und schlanke Auswertung der Videodaten möglich ist. Ein weiteres Ausschlusskriterium für ein Mann-über-Bord-Ereignis ist ein Abstand des Scheitels der Fallparabel vom Schiffsrand. Das Ausschließen ist hier in Form einer Markierung eines Ausschlussbereichs möglich. Vorzugsweise ist die Überwachungsvorrichtung 1 ausgebildet, dass ein Nutzer bei der Konfiguration der Überwachungsvorrichtung 1 über eine Mensch-Maschinen-Schnittstelle den Schiffsbereich 16 in dem Bild 14 markieren kann, wobei das Modellmodul ausgebildet ist, dies als Zusatzinformation zu hinterlegen. Ferner ist die Überwachungsvorrichtung 1 ausgebildet, dass ein Nutzer bei der Konfiguration der Überwachungsvorrichtung 1 über die Mensch-Maschinen-Schnittstelle Bildregionen von besonders gefährlichen Bereichen und/oder Bereichen von denen ein Mensch über Bord gehen kann, markiert. Alternativ oder zusätzlich ist die Überwachungsvorrichtung 1 ausgebildet, dass ein Nutzer bei der Konfiguration der Überwachungsvorrichtung 1 über die Mensch-Maschinen-Schnittstelle Bildregionen von Bereichen markiert, an denen es zu keinen Mann-über-Bord-Ereignissen kommen kann.

## Patentansprüche

1. Überwachungsvorrichtung (1) zur Mann-über-Bord-Überwachung in einem Schiffsabschnitt (5),
wobei der Schiffsabschnitt (5) mittels mindestens einer Kamera (2) videotechnisch überwacht ist, wobei die Kamera (2) ausgebildet ist, die Überwachung als Videodaten bereitzustellen,
mit einer Auswerteeinrichtung (9), wobei die Auswerteeinrichtung (9) eine Schnittstelle (10) zur Übernahme der Videodaten aufweist,
wobei die Auswerteeinrichtung (9) ausgebildet ist, basierend auf den Videodaten ein bewegendes Objekt im Schiffsabschnitt (5) zu detektieren und eine kinematische Größe des bewegenden Objekts zu bestimmen,
wobei die Auswerteeinrichtung (9) ausgebildet ist, basierend auf den Videodaten und der kinematischen Größe einen Maßstab zur Bestimmung einer Ausdehnung (8) des bewegenden Objekts zu bestimmen und das bewegende Objekt als ein Mann-über-Bord-Ereignis auf Basis seiner Ausdehnung (8) zu bewerten,
**dadurch gekennzeichnet, dass**
die Auswerteeinrichtung (9) ein Modellmodul umfasst, wobei das Modellmodul Zusatzinformationen zum Schiffsabschnitt (5) als ein Modell des Schiffsabschnitts (5) umfasst, wobei der Schiffsabschnitt (5) zweigeteilt, in einen Außenbereich (15) und einen Schiffsbereich (16) ist, wobei die Auswerteeinrichtung (9) ausgebildet ist, die kinematische Größe unter Einbeziehung der Zusatzinformationen (15) zu bestimmen, wobei der Schiffsbereich (16) von einer Auswertung ausgeschlossen ist.

2. Überwachungsvorrichtung (1) nach Anspruch 1, **dadurch gekennzeichnet, dass** die Auswerteeinrichtung (9) ausgebildet ist, als kinematische Größe eine gemessene Fallbeschleunigung zu bestimmen und zur Bestimmung der Ausdehnung (8) die gemessene Fallbeschleunigung (A) mit einer Referenzfallbeschleunigung zu vergleichen.

3. Überwachungsvorrichtung (1) nach einem der vorherigen Ansprüche, **dadurch gekennzeichnet, dass** die Auswerteeinrichtung (9) ein Trackingmodul umfasst, wobei das Trackingmodul ausgebildet ist, basierend auf den Videodaten eine Trajektorie für das bewegende Objekt zu bestimmen, wobei die kinematische Größe aus der Trajektorie bestimmbar ist.

4. Überwachungsvorrichtung (1) nach Anspruch 3, **dadurch gekennzeichnet, dass** die Auswerteeinrichtung (9) ein Selektiermodul aufweist, wobei das Selektiermodul ausgebildet ist, die kinematische Größe von Objekten mit parabelförmigen Trajektorien zu bestimmen und/oder Objekte mit nichtparabelförmiger Trajektorie von der Bestimmung der kinematischen Größe auszuschließen.

5. Überwachungsvorrichtung (1) nach einem der vorherigen Ansprüche, **dadurch gekennzeichnet, dass** die Auswerteeinrichtung (9) ein Segmentiermodul aufweist, wobei das Segmentiermodul ausgebildet ist, ein bewegendes Objekt in den Videodaten und/oder Einzelbildern der Videodaten als Objekt vor einem Hintergrund zu segmentieren.

6. Überwachungsvorrichtung (1) nach Anspruch 5, **dadurch gekennzeichnet, dass** das Trackingmodul ausgebildet ist, die Trajektorie basierend auf dem segmentierten Objekt, insbesondere dem Schwerpunkt des segmentierten Objekts, zu bestimmen.

7. Überwachungsvorrichtung (1) nach einem der vorherigen Ansprüche, **dadurch gekennzeichnet, dass** die Auswerteeinrichtung (9) ausgebildet ist, basierend auf der kinematischen Größe eine Auflösung in Bilder (14) der Videodaten zu bestimmen.

8. Überwachungsvorrichtung (1) nach einem der vorherigen Ansprüche, **gekennzeichnet durch** eine erste Kamera (2) zur Bereitstellung der Videodaten.

9. Überwachungsvorrichtung (1) nach Anspruch 8, **gekennzeichnet durch** eine zweite Kamera (3) zur Bereitstellung weiterer Videodaten, wobei erste Kamera (2) und zweite Kamera (3) einen gemeinsamen Bereich überwachen, wobei die Auswerteeinrichtung (9) ausgebildet ist, die Videodaten der ersten Kamera (2) und der zweiten Kamera (3) getrennt und/oder unabhängig auszuwerten.

10. Überwachungsvorrichtung (1) nach Anspruch 8 oder 9, **dadurch gekennzeichnet, dass** die Auswerteeinrichtung (9) von der ersten und/oder zweiten Kamera (2,3) umfasst ist.

11. Überwachungsvorrichtung (1) nach einem der vorherigen Ansprüche, **dadurch gekennzeichnet, dass** die Überwachungsvorrichtung (1) ausgebildet ist, bei Detektion eines Mann-über-Bord-Ereignisses einen Alarm auszugeben.

12. Überwachungsvorrichtung (1) nach Anspruch 11, **dadurch gekennzeichnet, dass** die Auswerteeinrichtung (9) ausgebildet ist, zu einem Alarm korrespondierende Videodaten auszugeben.

13. Überwachungsvorrichtung (1) nach einem der vorherigen Ansprüche,
**dadurch gekennzeichnet, dass**
die Zusatzinformationen zum Schiffsabschnitt (5) bereitstellbar sind.

14. Verfahren zur Bestimmung eines Mann-über-Bord-Ereignisses, insbesondere mit der Überwachungsvorrichtung (1) nach einem der vorherigen Ansprüche, wobei ein Schiffsabschnitt (5) mittels einer Kamera (2) videotechnisch überwacht wird und Videodaten bereitgestellt werden, wobei basierend auf den Videodaten eine kinematische Größe eines bewegenden Objektes bestimmt wird, wobei basierend auf den Videodaten und der kinematischen Größe ein Maßstab und/oder eine Ausdehnung des Objekts bestimmt wird, wobei das bewegende Objekt als das Mann-über-Bord-Ereignis auf Basis seiner Ausdehnung (8) bewertet wird,
**dadurch gekennzeichnet, dass**
ein Modellmodul Zusatzinformationen zum Schiffsabschnitt (5) als ein Modell des Schiffsabschnitts (5) umfasst, wobei der Schiffsabschnitt (5) zweigeteilt, in einen Außenbereich (15) und einen Schiffsbereich (16) ist, wobei die kinematische Größe unter Einbeziehung der Zusatzinformationen (15) bestimmt wird, wobei der Schiffsbereich (16) von einer Auswertung ausgeschlossen ist.

15. Computerprogramm, insbesondere ein Computerprogramm auf einem Datenträger, wobei das Computerprogramm ist ausgebildet, alle Schritte des Verfahrens nach Anspruch 14 durchzuführen, wenn das Computerprogramm auf einem Rechner, der Überwachungsvorrichtung (1) und/oder der Auswerteeinrichtung (9) ausgeführt wird.

## Claims

1. A monitoring device (1) for monitoring a man overboard situation in a ship section (5),
wherein the ship section (5) is monitored by video means of at least one camera (2), the camera being configured to provide the monitoring in the form of video data,
with an analysis device (9), the analysis device (9) including an interface (10) for transferring the video data,
wherein the analysis device (9) is configured to detect a moving object in the ship section (5) based on the video data and determine the kinematic quantity of the moving object,
wherein the analysis device (9) is configured to determine a scaling for determining an extent (8) of the moving object based on the video data and the kinematic variable and evaluate the moving object as a man-overboard event based on its extent (8),
**characterized in that**
the analysis device (9) comprises a model module, the model module including additional information about the ship section (5) as a model of the ship section (5), the ship section (5) being divided into two parts, in an outer area (15) and a ship area (16), wherein the analysis device (9) is configured to determine the kinematic quantity taking into account the additional information (15), the ship area (16) being excluded from the evaluation.

2. The monitoring device (1) according to claim 1, **characterized in**
**that** the analysis device (9) is configured to determine a measured free-fall acceleration as a kinematic variable and, in order to determine the extent (8), to compare the measured free-fall acceleration (A) with a reference free-fall acceleration.

3. The monitoring device (1) according to any of the previous claims, **characterized in that** the analysis device (9) comprises a tracking module, wherein the tracking module is configured to determine a trajectory for the moving object based on the video data, wherein the kinematic variable can be determined from the trajectory.

4. The monitoring device (1) according to claim 3, **characterized in that** the analysis device (9) comprises a selection module, the selection module being configured to determine the kinematic quantity of objects with parabolic trajectories and/or to exclude objects with non-parabolic trajectories from the determination of the kinematic quantity.

5. The monitoring device (1) according to any of the previous claims, **characterized in that** the analysis device (9) has a segmentation module, the segmentation module being configured to segment a moving object in the video data and/or individual frames of the video data as an object against a background.

6. The monitoring device (1) according to claim 5, **characterized in that** the tracking module is configured to determine the trajectory based on the segmented object, in particular the center of gravity of the segmented object.

7. Monitoring device (1) according to one of the preceding claims, **characterized in that** the analysis device (9) is configured to determine a resolution in images (14) of the video data based on the kinematic quantity.

8. The monitoring device (1) according to any of the previous claims, **characterized by** a first camera (2) for providing the video data.

9. The monitoring device (1) according to claim 8, **characterized by** a second camera (3) for providing further video data, wherein the first camera (2) and the second camera (3) monitor a common region, the analysis device (9) being configured to analyze the video data of the first camera (2) and the second camera (3) separately and/or independently.

10. The monitoring device (1) according to claim 8 or 9, **characterized in that** the analysis device (9) is comprised of the first and/or second camera (2, 3).

11. The monitoring device (1) according to any of the preceding claims, **characterized in that** the monitoring device (1) is configured to issue an alarm when a man-overboard event is detected.

12. The monitoring device (1) according to claim 11, **characterized in that** the analysis device (9) is configured to output video data corresponding to an alarm.

13. The monitoring device (1) according to any of the preceding claims, **characterized in that** the additional information to the ship section (5) can be provided.

14. A method for determining a man-overboard event, in particular using the monitoring device (1) according to any of the preceding claims, wherein a ship section (5) is monitored by video means of a camera (2) and video data is provided, wherein based on the video data, a kinematic quantity of a moving object is determined, wherein a scaling and/or an extent of the object is determined based on the video data and the kinematic quantity, wherein the moving object is evaluated as the man-overboard event on the basis of its extent (8),
**characterized in that**
a model module comprises additional information to the ship section (5) as a model of the ship section (5), wherein the ship section (5) is divided into two parts, into an outer area (15) and a ship area (16), wherein the kinematic quantity is determined taking into account the additional information (15), with the ship area (16) being excluded from an evaluation.

15. A computer program, in particular a computer program on a data carrier, wherein the computer program is configured to perform all steps of the method according to claim 14 when the computer program is executed on a computer, the monitoring device (1) and/or the analysis device (9).

## Revendications

1. Dispositif de surveillance (1) pour la surveillance d'homme à la mer dans une section de navire (5),
dans lequel la section de navire (5) est surveillée par la technique vidéo au moyen d'au moins une caméra (2), dans lequel la caméra (2) est formée afin de fournir la surveillance sous forme de données vidéo,
avec un dispositif d'évaluation (9), dans lequel le dispositif d'évaluation (9) présente une interface (10) pour la prise en charge des données vidéo,
dans lequel le dispositif d'évaluation (9) est formé afin de détecter sur la base des données vidéo un objet mobile dans la section de navire (5) et de déterminer une grandeur cinématique de l'objet mobile,
dans lequel le dispositif d'évaluation (9) est formé afin de déterminer sur la base des données vidéo et de la grandeur cinématique une échelle de mesure pour la détermination d'une étendue (8) de l'objet mobile et d'évaluer l'objet mobile comme évènement d'homme à la mer sur la base de son étendue (8),
**caractérisé en ce que**
le dispositif d'évaluation (9) comprend un module de modèle, dans lequel le module de modèle comprend des informations supplémentaires relatives à la section de navire (5) comme un modèle de la section de navire (5), dans lequel la section de navire (5) est divisée en deux en une zone extérieure (15) et en une zone de navire (16), dans lequel le dispositif d'évaluation (9) est formé afin de déterminer la grandeur cinématique en intégrant les informations supplémentaires (15), dans lequel la zone de navire (16) est exclue d'une évaluation.

2. Dispositif de surveillance (1) selon la revendication 1, **caractérisé en ce que** le dispositif d'évaluation (9) est formé afin de déterminer comme grandeur cinématique une accélération de la pesanteur mesurée et de comparer pour la détermination de l'étendue (8) l'accélération de la pesanteur (A) mesurée avec une accélération de la pesanteur de référence.

3. Dispositif de surveillance (1) selon l'une quelconque des revendications précédentes, **caractérisé en ce que** le dispositif d'évaluation (9) comprend un module de suivi, dans lequel le module de suivi est formé afin de déterminer sur la base de données vidéo une trajectoire pour l'objet mobile, dans lequel la grandeur cinématique peut être déterminée à partir de la trajectoire.

4. Dispositif de surveillance (1) selon la revendication 3, **caractérisé en ce que** le dispositif d'évaluation (9) présente un module de sélection, dans lequel le module de sélection est formé afin de déterminer la grandeur cinématique d'objets avec des trajectoires paraboliques et/ou d'exclure des objets avec une trajectoire non parabolique de la détermination de la grandeur cinématique.

5. Dispositif de surveillance (1) selon l'une quelconque des revendications précédentes, **caractérisé en ce que** le dispositif d'évaluation (9) présente un module de segmentation, dans lequel le module de segmentation est formé afin de segmenter un objet mobile dans les données vidéo et/ou les images individuelles des données vidéo comme objet avec un arrière-plan.

6. Dispositif de surveillance (1) selon la revendication 5, **caractérisé en ce que** le module de suivi est formé afin de déterminer la trajectoire sur la base de l'objet segmenté, en particulier le centre de gravité de l'objet segmenté.

7. Dispositif de surveillance (1) selon l'une quelconque des revendications précédentes, **caractérisé en ce que** le dispositif d'évaluation (9) est formé afin de déterminer sur la base de la grandeur cinématique une résolution dans des images (14) des données vidéo.

8. Dispositif de surveillance (1) selon l'une quelconque des revendications précédentes, **caractérisé par** une première caméra (2) pour la fourniture des données vidéo.

9. Dispositif de surveillance (1) selon la revendication 8, **caractérisé par** une seconde caméra (3) pour la fourniture d'autres données vidéo, dans lequel la première (2) et la seconde caméra (3) surveillent une zone commune, dans lequel le dispositif d'évaluation (9) est formé afin d'évaluer séparément et/ou indépendamment les données vidéo de la première caméra (2) et de la seconde caméra (3).

10. Dispositif de surveillance (1) selon la revendication 8 ou 9, **caractérisé en ce que** le dispositif d'évaluation (9) est compris par la première et/ou la seconde caméra (2, 3).

11. Dispositif de surveillance (1) selon l'une quelconque des revendications précédentes, **caractérisé en ce que** le dispositif de surveillance (1) est formé afin d'émettre une alarme lors de la détection d'un évènement d'homme à la mer.

12. Dispositif de surveillance (1) selon la revendication 11, **caractérisé en ce que** le dispositif d'évaluation (9) est formé afin d'émettre des données vidéo correspondant à une alarme.

13. Dispositif de surveillance (1) selon l'une quelconque des revendications précédentes, **caractérisé en ce que**
les informations supplémentaires relatives à la section de navire (5) peuvent être fournies.

14. Procédé de détermination d'un évènement d'homme à la mer, en particulier avec le dispositif de surveillance (1) selon l'une quelconque des revendications précédentes, dans lequel une section de navire (5) est surveillée par la technique vidéo au moyen d'une caméra (2) et des données vidéo sont fournies, dans lequel une grandeur cinématique d'un objet mobile est déterminée sur la base des données vidéo, dans lequel une échelle de mesure et/ou une étendue de l'objet est déterminée sur la base de données vidéo et de la grandeur cinématique, dans lequel l'objet mobile est évalué comme évènement d'homme à la mer sur la base de son étendue (8),
**caractérisé en ce que**
un module de modèle comprend des informations supplémentaires relatives à la section de navire (5) comme un modèle de la section de navire (5), dans lequel la section de navire (5) est divisée en deux en une zone extérieure (15) et en une zone de navire (16), dans lequel la grandeur cinématique est déterminée en intégrant les informations supplémentaires (15), dans lequel la zone de navire (16) est exclue d'une évaluation.

15. Programme informatique, en particulier programme informatique sur un support de données, dans lequel le programme informatique est formé afin d'exécuter toutes les étapes du procédé selon la revendication 14 lorsque le programme informatique est exécuté sur un ordinateur, le dispositif de surveillance (1) et/ou le dispositif d'évaluation (9).
